# FASCICULE DE BREVET EUROPEEN

(11) **EP 4 003 767 B1**
(45) Date de publication et mention de la délivrance du brevet: **08.04.2026**
(21) Numéro de dépôt: 20739401.6
(22) Date de dépôt: 16.07.2020
(51) Int. Cl.: B60J 10/84, B60Q 1/32, B60Q 3/217, B60Q 3/64, B60Q 3/78

(54) **JOINT D'ÉTANCHÉITÉ COMPRENANT UN DISPOSITIF LUMINEUX**
DICHTUNG MIT EINER LEUCHTVORRICHTUNG
SEAL COMPRISING A LUMINOUS DEVICE

(30) Priorité: 30.07.2019 FR 1908639
(43) Date de publication de la demande: 01.06.2022
(73) Titulaire: Renault s.a.s, 92100 Boulogne Billancourt (FR)
(72) Inventeur: OUTTIRAPOULLE, Chandar, 78910 BEHOUST (FR); LE COEDIC, Yoann, 78120 Rambouillet (FR)
(74) Mandataire: Renault Group
(86) Numéro de dépôt international: PCT/EP2020/070102
(87) Numéro de publication internationale: WO 2021/018609

(56) Documents cités:
- WO-A1-2015/030177
- CN-A- 106 467 013
- DE-U1- 202017 003 062
- FR-A1- 3 055 833
- JP-B2- 5 455 744
- US-B2- 7 082 721

## Description

### Domaine Technique de l'invention

L'invention concerne un joint d'étanchéité pour une porte d'un véhicule automobile, le joint d'étanchéité comprenant un dispositif lumineux. L'invention porte aussi sur un véhicule automobile comprenant un tel joint d'étanchéité. L'invention porte encore sur un procédé de montage d'un tel joint d'étanchéité.

### Etat de la technique antérieure

Dans l'industrie automobile, le design est primordial. Chaque constructeur cherche à se démarquer en créant des signatures lumineuses sur ses véhicules. Une signature lumineuse est un effet optique généré par une source de lumière. Elle permet d'éclairer une partie du véhicule pour la mettre en valeur.

Une signature lumineuse est classiquement focalisée sur les blocs optiques extérieurs avant et arrière. Toutefois, pour obtenir une plus grande singularité, les constructeurs automobiles cherchent également à intégrer des signatures lumineuses à l'intérieur du véhicule, notamment sur le tableau de bord ou sur les garnitures de porte par exemple. Toutefois, les signatures optiques connues de l'état de la technique manquent d'originalité. Les sources de lumières utilisées ne sont pas discrètement intégrées dans l'habitacle et leur aspect esthétique peut être décevant.

Il est également connu de JP 5 455744 B2 un joint d'étanchéité comportant un cordon pelable pour faciliter son montage.

### Présentation de l'invention

Le but de l'invention est de fournir un dispositif de signature lumineuse remédiant aux inconvénients ci-dessus et améliorant les dispositifs de signature lumineuse connus de l'art antérieur.

Un premier objet de l'invention est de fournir une signature lumineuse dans l'habitacle d'un véhicule automobile qui soit originale en créant au moins un nouveau type d'ambiance intérieure véhicule.

Plus précisément, un deuxième objet de l'invention est de fournir une signature lumineuse localisée sur le contour d'une porte.

Un troisième objet de l'invention est d'obtenir une signature lumineuse discrète et esthétique.

Un quatrième objet de l'invention est de fournir une signature lumineuse simple à fabriquer et à assembler sur un véhicule automobile.

### Résumé de l'invention

L'invention se rapporte à un joint d'étanchéité pour une porte d'un véhicule automobile, le joint d'étanchéité comprenant une première lèvre destinée à recouvrir au moins partiellement un élément de garniture intérieure d'un véhicule automobile, et un dispositif lumineux s'étendant sous la première lèvre.

Le joint d'étanchéité peut comprendre une armature pour fixer le joint d'étanchéité à une caisse d'un véhicule automobile, la première lèvre recouvrant l'armature.

Le joint d'étanchéité peut comprendre une deuxième lèvre destinée à entrer en contact avec une porte d'un véhicule automobile en position fermée.

La première lèvre peut comprendre une surface extérieure s'étendant dans le prolongement d'une surface extérieure de la deuxième lèvre.

Le joint d'étanchéité peut comprendre une section transversale sensiblement constante.

Le dispositif lumineux peut comprendre une barrette de LEDs, et/ou un tube réfléchissant coopérant avec une unique source de lumière.

La première lèvre peut comprendre une face extérieure destinée à être visible et une face intérieure destinée à être masquée, la face intérieure comprenant un premier moyen de retenue du dispositif lumineux, notamment le premier moyen de retenue comprenant un bourrelet formé en élastomère.

Le premier moyen de retenue peut coopérer avec un premier bord du dispositif lumineux, et le joint d'étanchéité peut comprendre un deuxième moyen de retenue du dispositif lumineux, le deuxième moyen de retenue coopérant avec un deuxième bord du dispositif lumineux.

Le joint d'étanchéité peut comprendre un cordon pelable, le cordon pelable étant lié à la première lèvre, le cordon pelable étant destiné à être dissocié du joint d'étanchéité pour assurer un bon positionnement de la première lèvre au-dessus de l'élément de garniture.

L'invention se rapporte également à un véhicule automobile comprenant un cadre de porte pourvu d'une ouverture, une porte apte à fermer ladite ouverture, et un joint d'étanchéité tel que défini précédemment, le joint d'étanchéité étant fixé au cadre de porte.

Le dispositif lumineux du joint d'étanchéité peut être configuré pour émettre des rayons lumineux vers l'intérieur du véhicule automobile.

L'invention se rapporte également à un procédé de montage d'un joint d'étanchéité tel que défini précédemment sur une caisse d'un véhicule automobile, le procédé de montage comprenant :
- une étape de fixation du joint d'étanchéité sans son dispositif lumineux à la caisse du véhicule, puis
- une étape d'insertion du dispositif lumineux sous la première lèvre, puis
- une étape de fixation d'un élément de garniture intérieure à la caisse du véhicule, puis
- une étape de positionnement de la première lèvre au- dessus de l'élément de garniture intérieure.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue isométrique et en perspective d'une partie d'un véhicule automobile selon un premier mode de réalisation de l'invention.
[Fig. 2] La figure 2 est une vue isométrique et en perspective d'une partie d'un véhicule automobile selon un deuxième mode de réalisation de l'invention.
[Fig. 3] La figure 3 est une vue isométrique et en perspective de l'intérieur du véhicule automobile selon le deuxième mode de réalisation de l'invention.
[Fig. 4] La figure 4 est une vue schématique en coupe d'un joint d'étanchéité selon un mode de réalisation de l'invention.
[Fig. 5] La figure 5 est une vue schématique en coupe d'un joint d'étanchéité selon une première variante de réalisation de l'invention.
[Fig. 6] La figure 6 est une vue schématique en coupe d'un joint d'étanchéité selon une deuxième variante de réalisation de l'invention.
[Fig. 7] La figure 7 est une vue schématique du joint d'étanchéité au cours de son procédé de fabrication.
[Fig. 8] La figure 8 est une vue schématique du joint d'étanchéité au cours de son procédé de fabrication selon une variante de réalisation de l'invention.

### Description détaillée

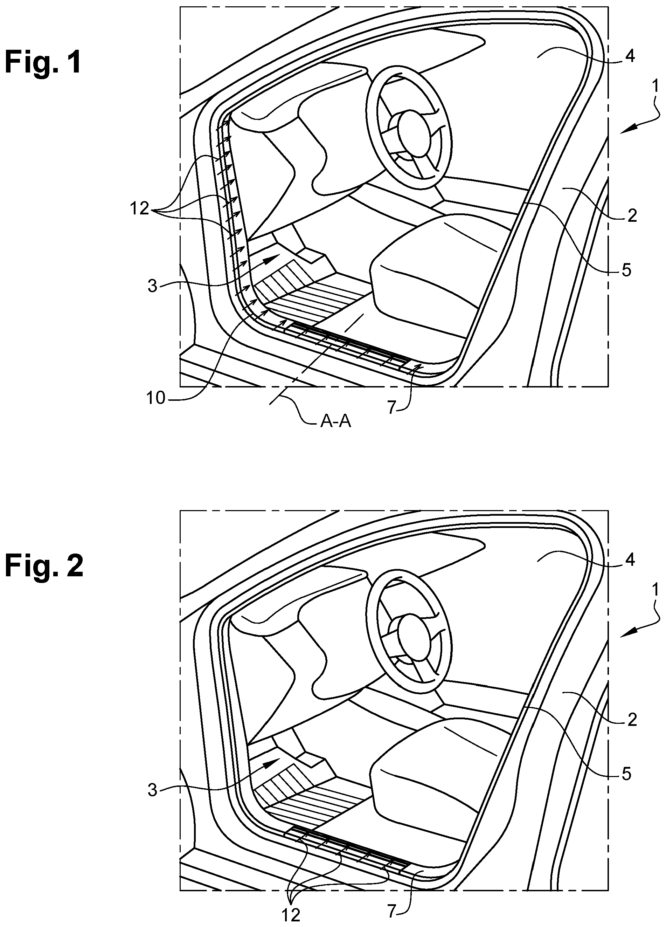

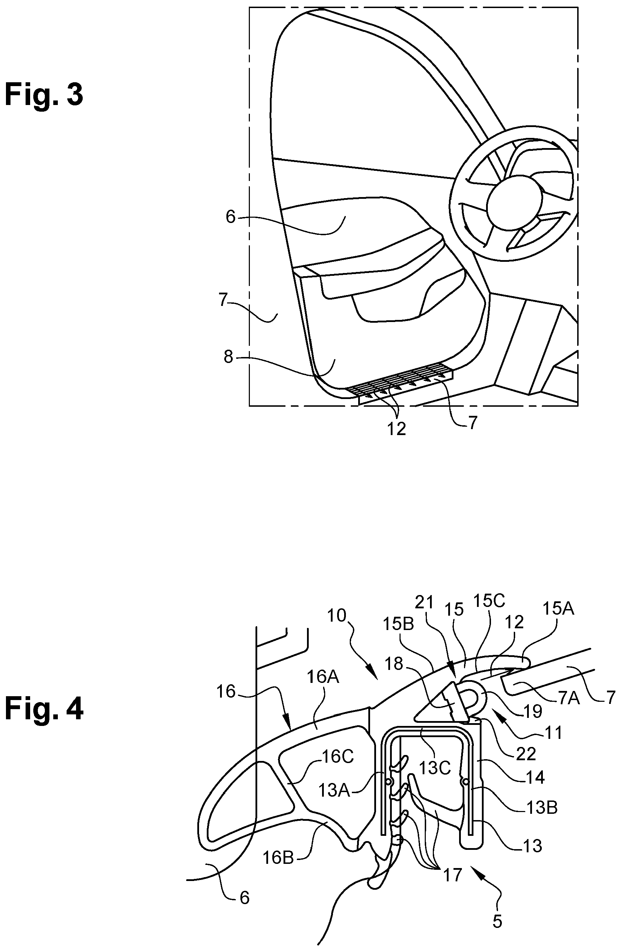

La figure 1 illustre partiellement un véhicule 1 selon un mode de réalisation de l'invention. Le véhicule 1 peut être de toute nature. Notamment, il peut être par exemple un véhicule particulier, un véhicule utilitaire, un camion ou un bus. Le véhicule 1 comprend une caisse 2 formant une structure rigide du véhicule 1. La caisse 2 délimite un habitacle 3 à l'intérieur duquel des passagers peuvent prendre place. Le véhicule 1 comprend donc au moins une ouverture 4 permettant aux passagers d'entrer ou de sortir de l'habitacle 3. Cette ouverture 4 peut être fermée par une porte 6 (visible sur la figure 3). La caisse 2 comprend donc un cadre de porte 5 délimitant l'ouverture 4. A l'intérieur du véhicule 1, c'est-à-dire dans l'habitacle 3 du véhicule, la caisse 2 est recouverte par des garnitures intérieures 7. Les garnitures intérieures 7 masquent la caisse 2 et participent à l'esthétisme et au confort de l'habitacle.

L'ouverture 4 représentée sur la figure 1 est une ouverture du véhicule positionnée du côté du conducteur du véhicule. En variante, l'invention pourrait également être appliquée à une ouverture pour un passager avant, située de l'autre côté du conducteur. Elle pourrait également être appliquée à une ouverture arrière permettant de faire monter des passagers sur des places arrières du véhicule. Elle pourrait également être appliquée à une ouverture de coffre, une ouverture de toit ouvrant, ou encore toute ouverture du véhicule apte à être refermé par un élément de fermeture.

Le véhicule 1 comprend un joint d'étanchéité 10 selon un mode de réalisation de l'invention. Le joint d'étanchéité 10 est fixé au cadre de porte 5. Avantageusement le joint d'étanchéité à la forme d'un anneau et s'étend tout autour de l'ouverture 4, le long du cadre de porte 5. Toutefois en variante, le joint d'étanchéité pourrait ne s'étendre que sur une partie du pourtour de l'ouverture 4, par exemple uniquement dans une moitié inférieure du pourtour de l'ouverture 4. Le joint d'étanchéité 10 est en contact à la fois avec le cadre de porte 5 et avec la porte 6 lorsque celle-ci est en position fermée. Le joint d'étanchéité permet d'isoler l'habitacle 3 de l'extérieur du véhicule 1. Il permet de rendre étanche l'interface entre la porte 6 et le cadre de porte 5. Notamment, il permet d'empêcher que de l'eau ou des poussières pénètrent dans l'habitacle. Le joint d'étanchéité forme donc une ligne épousant le contour de l'ouverture 4 et délimitant l'habitacle de l'extérieur du véhicule. En remarque, l'invention pourrait également être transposée à un joint d'étanchéité fixé non pas au cadre de porte 5 mais à la porte 6.

Le joint d'étanchéité 10 comprend un dispositif lumineux 11 (visible sur la figure 4) apte à émettre des rayons lumineux 12 vers l'intérieur du véhicule. Les rayons lumineux peuvent être orientés sensiblement perpendiculairement au plan formé par l'ouverture 4 et vers l'intérieur du véhicule. Les rayons lumineux peuvent être visibles par le conducteur ou un passager du véhicule assis à l'intérieur du véhicule. Les rayons lumineux 12 peuvent être visibles tout au moins lorsque la porte 6 du véhicule est ouverte, voire même indépendamment de la position de la porte du véhicule, c'est-à-dire même lorsqu'elle est fermée. En revanche, les rayons lumineux ne sont pas destinés à être projetés vers l'extérieur du véhicule. Les rayons lumineux peuvent donc de préférence être invisibles depuis l'extérieur du véhicule lorsque la porte est fermée.

Comme cela apparait sur la figure 1, le dispositif lumineux peut s'étendre le long de la totalité du joint d'étanchéité 10. Il peut donc émettre des rayons lumineux 12 sur tout le contour de l'ouverture 4. En variante, comme cela apparait sur la figure 2, le dispositif lumineux peut s'étendre le long d'une partie seulement du joint d'étanchéité 10. Par exemple, le dispositif lumineux peut être configuré pour émettre des rayons lumineux éclairant uniquement un seuil de porte, c'est-à-dire une partie horizontale inférieure du cadre de porte 5. Il peut être configuré pour mettre en évidence un logo, ou un élément de décor particulier de l'habitacle.

La figure 3 est une vue partielle du véhicule de la figure 2 depuis un point de vue à l'intérieur de l'habitacle 3. On constate que, lorsque la porte 6 est en position fermée, le joint d'étanchéité 10 est masqué mais les rayons lumineux 12 éclairent l'intérieur de l'habitacle. Les rayons lumineux semblent provenir d'une fente localisée entre la garniture intérieure 7 fixée au seuil de la porte et une garniture 8 fixée à la porte 6. L'effet visuel obtenu est donc celui d'une fuite de lumière sur tout ou partie du contour de la porte 6.

Le joint d'étanchéité 10 peut avoir une section transversale à la direction dans laquelle il s'étend qui est sensiblement constante. Notamment, le joint d'étanchéité 10 peut être obtenu à partir d'un procédé de fabrication par extrusion. La figure 4 illustre plus en détail une section du joint d'étanchéité 10 selon une section transversale A-A. Le joint d'étanchéité 10 comprend une armature 13 et une partie en élastomère 14 recouvrant l'armature 13. La partie en élastomère 14 comprend une première lèvre 15 recouvrant partiellement la garniture intérieure 7 fixée à la caisse 2 du véhicule 1. La partie en élastomère 14 comprend également une deuxième lèvre 16 destinée à entrer en contact avec la porte 6 lorsqu'elle est en position fermée.

L'armature 13 peut avoir sensiblement la forme d'un "U". L'armature comprend donc une première branche 13A (vers l'extérieur du véhicule) et une deuxième branche 13B (vers l'intérieur du véhicule), sensiblement parallèle à la première branche 13A. L'armature comprend également un fond 13C reliant les deux branches 13A et 13B. L'armature peut être emmanchée, autrement dit chaussée sur un bord du cadre de porte 5. Les parois de la caisse 2 formant le cadre de porte 5 peuvent être en appui simultanément sur les deux branches 13A, 13B afin de mettre l'armature sous tension et ainsi assurer une cohésion suffisante du joint d'étanchéité sur le cadre de porte 5. L'armature peut être déformée lorsque le joint d'étanchéité est fixé au cadre de porte 5. L'armature 13 peut être par exemple un élément métallique, notamment un élément de tôle plié selon une forme en "U". L'armature 13 peut être complètement enrobée ou recouverte par la partie en élastomère 14. A l'intérieur du U de l'armature, le joint d'étanchéité peut comprendre diverses languettes 17. Les languettes 17 peuvent fonctionner comme des pinces et contribuer à la bonne cohésion du joint d'étanchéité sur le cadre de porte 5, ainsi qu'à la bonne étanchéité de l'interface entre le joint d'étanchéité 10 et le cadre de porte 5.

La partie en élastomère 14 peut être constitué par exemple d'EPDM (c'est -à-dire d'éthylène-propylène-diène monomère) ou en variante de tout autre matériau suffisamment souple et élastique pour former une interface étanche avec la porte 6. La partie en élastomère 14 peut être fabriquée à partir d'un unique matériau ou en variante être constituée de matériaux différents. Par exemple la première lèvre 15 et la deuxième lèvre 16 pourraient être constituées de matériaux différents.

La première lèvre 15 prend naissance sensiblement au niveau de la jonction entre la première branche 13A et le fond 13C. Elle s'étend globalement vers l'intérieur du véhicule. La première lèvre 15 recouvre donc le fond 13C de l'armature 13. La première lèvre 15 comprend une extrémité 15A qui recouvre partiellement un élément de garniture intérieure 7. L'extrémité 7A de la garniture intérieure est donc masqué par la première lèvre 15. L'extrémité 15A de la première lèvre 15 prend appui sur une face supérieure de la garniture intérieure 7. En remarque, une lame d'air ou fente peut s'établir au moins localement entre l'extrémité 15A et la face supérieure de la garniture intérieure 7. Cette lame d'air peut être due à un état de surface non parfaitement lisse de la première lèvre 15 ou de la face supérieure de la garniture intérieure 7. La lame d'air peut également être due aux formes du joint d'étanchéité et/ou de la garniture intérieure 7. Cette lame d'air permet le passage des rayons lumineux 12 issus du dispositif lumineux 11.

Le dispositif lumineux 11 est recouvert par la première lèvre 15. Il est donc à la fois protégé et masqué par la première lèvre 15. Le dispositif lumineux 11 n'est pas visible directement, en revanche, les rayons lumineux 12 issus du dispositif lumineux sont bien visibles. On peut ainsi éviter d'éblouir les passagers du véhicule puisque ceux-ci ne voient pas directement le dispositif lumineux 11.

La première lèvre 15 peut comprendre une simple paroi. La première lèvre comprend une surface extérieure 15B orientée vers le haut et une surface intérieure 15C orientée vers le bas sur la figure 4. La surface extérieure 15B est une partie visible du joint d'étanchéité tandis que la surface intérieure 15C est invisible ou masquée. La première lèvre 15, en recouvrant l'armature 13, permet de masquer les déformations de l'armature, notamment les déformations résultant de l'emmanchement de l'armature sur le cadre de porte 5. Ainsi, la première lèvre 15 pourrait également être dénommée "lèvre cosmétique" ou encore "tubing d'aspect".

La deuxième lèvre 16 prend naissance sensiblement au niveau de la première branche 13A de l'armature. La deuxième lèvre 16 peut comprendre une double paroi. Une première paroi 16A prend naissance sensiblement au niveau de la jonction entre la première branche 13A et le fond 13C, c'est-à-dire sensiblement au même endroit que la première lèvre 15. Une deuxième paroi 16B prend naissance sensiblement au niveau de l'extrémité de la première branche 13A. Les deux parois 16A et 16B se rejoignent de sorte que la deuxième lèvre prend sensiblement la forme d'un "V" couché. Les deux parois 16A et 16B peuvent être reliées par une nervure 16C procurant une rigidité adéquate à la deuxième lèvre. La deuxième lèvre 16 est conçue pour entrer en interférence avec la porte 6 lorsque celle-ci est fermée. Ainsi, la deuxième lèvre 16 pourrait également être dénommée "lèvre d'étanchéité" ou "tubing d'étanchéité".

Le dispositif lumineux 11 est logé à l'intérieur du joint d'étanchéité 10. Plus précisément il est positionné entre le fond 13C de l'armature enrobé par de l'élastomère, et la surface intérieure 15C de la première lèvre. Comme représenté sur la figure 4, le dispositif lumineux peux se présenter sous la forme d'une barrette de LEDs. Le dispositif lumineux 11 comprend donc un support 18 sur lequel est fixée une série de LEDs 19, c'est-à-dire une série de diodes électroluminescentes. Le dispositif lumineux est donc relié électriquement à une source d'énergie électrique (non représentée) de manière à activer les diodes électroluminescentes. Le support 18 peut comprendre au moins un fil électrique relié à chacune des LEDs. Avantageusement, la barrette de LEDs peut être identique ou de même technologie que les LEDs utilisées dans des blocs optiques situés à l'avant et à l'arrière du véhicule. Ainsi, on obtient une signature lumineuse homogène entre la lumière produite à l'intérieure de l'habitacle et la lumière produite à l'extérieur du véhicule.

Le dispositif lumineux 11 est maintenu en position grâce à deux moyens de retenue 21, 22. Les deux moyens de retenue coopèrent chacun avec un bord du support 18. Un premier moyen de retenue 21 comprend un bourrelet, ou crochet, formé sur la surface intérieure 15C de la première lèvre 15. Ce bourrelet est formé en élastomère. Il consiste en une excroissance de la première lèvre. Il coopère avec un premier bord du support 18 pour retenir le dispositif lumineux entre la première lèvre 15 et le fond 13C de l'armature. Le deuxième moyen de retenue 22 est formé également dans la partie en élastomère 14 du joint d'étanchéité. Plus précisément, le deuxième moyen de retenue 22 est formé par un bourrelet, ou crochet, positionné au dos de l'armature, c'est-à-dire contre le fond 13C de l'armature et en vis-à-vis du premier moyen de retenue 21. Le deuxième moyen de retenue 22 coopère avec un deuxième bord du support 18 pour retenir le dispositif lumineux entre la première lèvre 15 et le fond 13C de l'armature. Le dispositif lumineux 11 est donc maintenu directement par la partie en élastomère 14 du joint d'étanchéité 11. Le joint d'étanchéité 10 ne comprend donc pas une pièce de fixation spécifique qui servirait à fixer le dispositif lumineux à la partie en élastomère 14.

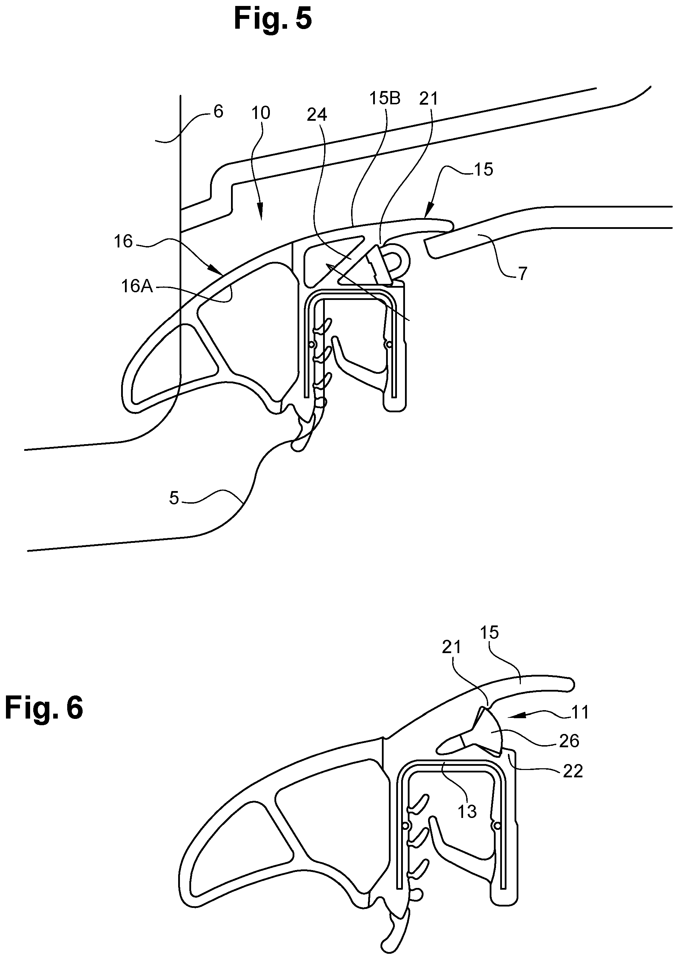

La figure 5 illustre une première variante de réalisation du joint d'étanchéité 10. Dans cette variante de réalisation, la surface extérieure 15B de la première lèvre 15 s'étend dans le prolongement de la surface extérieure de la première paroi 16A de la deuxième lèvre 16. Par conséquent la surface apparente du joint d'étanchéité est globalement lisse. Elle ne comprend pas d'angle ou arrête marquant une délimitation entre la première lèvre et la deuxième lèvre. Dans cette variante de réalisation la première lèvre 15 est soutenue par une jambe 24 également formée en élastomère. La jambe 24 prend naissance sensiblement au niveau de la jonction entre la première branche 13A et le fond 13C et s'étend sensiblement jusqu'à mi- longueur de la première lèvre 15. Le premier moyen de retenu 21 est alors formé sensiblement à la jonction entre la jambe 24 et la première lèvre. L'intégration de la jambe 24 peut faciliter le procédé de fabrication du joint d'étanchéité par extrusion. Dans cette variante de réalisation, le joint d'étanchéité comprend donc trois tubes s'attendant parallèlement les uns aux autres, alors qu'il n'en comprend que deux dans le mode de réalisation illustré sur la figure 4.

En remarque, dans ce mode de réalisation comme dans le mode de réalisation précédemment décrit, le dispositif lumineux assure une fonction de soutien pour la première lèvre 15. La position et la forme de la première lèvre 15 est donc différente de celle qu'elle prendrait en l'absence du dispositif lumineux 11.

La figure 6 illustre une variante de réalisation du dispositif lumineux 11. Dans cette variante de réalisation le dispositif lumineux 11 comprend un tube réfléchissant 26 coopérant avec une unique source de lumière. Le tube réfléchissant peut par exemple être réalisé en un matériau transparent et translucide de section constante. Il assure une fonction de guide de lumière pour l'unique source de lumière. La lumière est ainsi diffusée uniformément sur toute la longueur du tube réfléchissant 26. Le tube réfléchissant peut avoir une section sensiblement en forme de quart de disque : il peut comprendre deux bords grossièrement perpendiculaires reliés par une surface en arc de cercle. Il peut coopérer avec les moyens de retenue 21 et 22 de sorte à maintenir le dispositif lumineux en place entre la première lèvre 15 et l'armature 13. En remarque, le dispositif lumineux de cette variante de réalisation pourrait également être utilisé en combinaison avec la variante de réalisation de la première lèvre 15 telle que représentée sur la figure 5. Selon d'autres variantes de réalisation, le dispositif lumineux pourrait être réalisé avec tout moyen apte à émettre des rayons lumineux dans le spectre visible. Notamment le dispositif lumineux pourrait comprendre par exemple un élément incandescent et/ou une fibre optique.

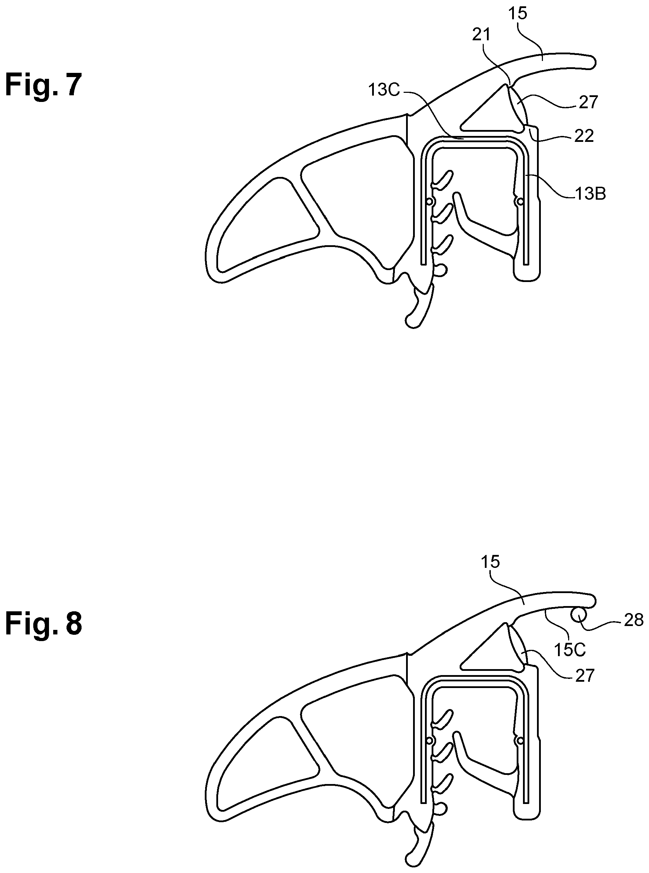

Le joint d'étanchéité 10 peut être fabriqué au moyen d'un procédé de fabrication par extrusion. Par exemple, un moule d'extrusion ayant une forme complémentaire à la section transversale A-A du joint d'étanchéité peut être utilisé. Pour faciliter l'insertion du dispositif lumineux entre la première lèvre et le fond 13C de l'armature, un premier cordon pelable 27 peut être prévu. Comme illustré sur la figure 7, le premier cordon pelable 27 peut avoir sensiblement une forme d'ellipse. Il peut relier un premier point situé environ à la jonction entre la deuxième branche 13B et le fond 13C à un deuxième point, sensiblement à mi-longueur de la première lèvre 15. En particulier, le cordon premier pelable peut s'étendre entre les deux moyens de retenue 21, 22. Le cordon pelable est faiblement accroché au reste du joint d'étanchéité. Il peut être facilement arraché (c'est-à-dire découpé ou pelé) ce qui permet de découvrir le logement dans lequel sera inséré le dispositif lumineux 11. Le premier cordon pelable 27 peut faciliter le procédé d'extrusion du joint d'étanchéité.

Comme illustré sur la figure 8, le joint d'étanchéité 10 peut également être équipé d'un deuxième cordon pelable 28 positionné contre la surface intérieure 15C de la première lèvre au niveau de son extrémité 15A. De la même manière que pour le premier cordon pelable, le deuxième cordon pelable est faiblement fixé à la première lèvre 15. Il peut être découpé lors de la mise en place du joint d'étanchéité sur le cadre de porte 5. Le deuxième cordon pelable peut faciliter le bon positionnement de la première lèvre au-dessus de l'élément de garniture intérieure lors de l'assemblage.

Pour assembler le joint d'étanchéité au cadre de porte 5, on peut par exemple assembler dans un premier temps le dispositif lumineux au reste du joint d'étanchéité 10 puis fixer le joint d'étanchéité équipé du dispositif lumineux 11 au cadre de porte 5. Selon une variante de réalisation du procédé de montage, on peut également tout d'abord fixer le joint d'étanchéité 10 sans son dispositif lumineux 11 à la caisse 2 du véhicule. Ensuite, on peut, insérer le dispositif lumineux 11 sous la première lèvre 15. On peut alors fixer la garniture intérieure 9 à la caisse 2. Enfin on peut positionner la première lèvre au-dessus de la garniture intérieure 6. Cette dernière étape pourra avantageusement être réalisée en utilisant un deuxième cordon pelable 28 tel que décrit précédemment.

Lorsque le véhicule 1 est utilisé, la source d'énergie électrique peut activer le dispositif lumineux 11. Des rayons lumineux 12 sont émis par le dispositif lumineux. Ils passent entre la première lèvre 15 et la garniture intérieure 7 produisant un effet de fuite de lumière visible dans l'habitacle. La garniture intérieure 7 est ainsi éclairée par le dispositif lumineux le long du joint d'étanchéité. On obtient ainsi une signature lumineuse unique dans le véhicule. L'invention permet ainsi de créer un effet lumineux original, sans modifier l'architecture du véhicule, notamment sans modifier l'interface du joint d'étanchéité. De plus, comme le dispositif lumineux est situé entre la lèvre cosmétique, visible par un utilisateur du véhicule, et l'armature du joint qui réalise la tenue en position du joint, il permet de masquer tout défaut de qualité perçue dû à une déformation de l'armature du joint d'étanchéité lors de son montage.

## Revendications

1. Joint d'étanchéité (10) pour une porte (6) d'un véhicule (1) automobile, comprenant une armature (13) et une partie en élastomère (14) recouvrant l'armature (13), la partie en élastomère comprenant une première lèvre (15) destinée à recouvrir au moins partiellement un élément de garniture intérieure (7) d'un véhicule (1) automobile, la première lèvre (15) comprenant une face extérieure (15B) destinée à être visible et une face intérieure (15C) destinée à être masquée, le joint comprenant un premier cordon pelable (27) lié à la première lèvre (15),
**caractérisé en ce que** la face intérieure (15C) comprend un premier moyen de retenue (21) d'un dispositif lumineux (11), le premier moyen de retenue (21) comprenant un bourrelet formé en élastomère, et **en ce que** le le joint d'étanchéité comprend un deuxième moyen de retenue (22) d'un dispositif lumineux (11), le deuxième moyen de retenue (22) comprenant un bourrelet formé en élastomère, et positionné au dos de l'armature, contre un fond (13C) de l'armature (13) et en vis-à-vis du premier moyen de retenue (21), le premier cordon pelable (27) étant destiné à être dissocié du joint d'étanchéité (10) pour découvrir un logement rendant apte le montage du dispositif lumineux (11) sous la première lèvre (15).

2. Joint d'étanchéité (10) selon la revendication précédente, **caractérisé en ce qu'**il comprend un deuxième cordon pelable (28) étant destiné à être dissocié du joint d'étanchéité (10) pour assurer un bon positionnement de la première lèvre (15) au-dessus de l'élément de garniture (7).

3. Joint d'étanchéité (10) selon la revendication précédente, **caractérisé en ce que** la première lèvre (15) recouvre l'armature (13).

4. Joint d'étanchéité (10) selon l'une des revendications précédentes, **caractérisé en ce qu'**il comprend une deuxième lèvre (16) destinée à entrer en contact avec une porte (6) d'un véhicule (1) automobile en position fermée.

5. Joint d'étanchéité (10) selon la revendication précédente, **caractérisé en ce que** la première lèvre (15) comprend une surface extérieure (15B) s'étendant dans le prolongement d'une surface extérieure de la deuxième lèvre (16).

6. Joint d'étanchéité (10) selon l'une des revendications précédentes, **caractérisé en ce qu'**il comprend une section transversale (A-A) sensiblement constante.

7. Véhicule (1) automobile comprenant un cadre de porte (5) pourvu d'une ouverture (4), une porte (6) apte à fermer ladite ouverture (4), et un joint d'étanchéité (10) selon l'une des revendications précédentes, le joint d'étanchéité (10) étant fixé au cadre de porte (5).

8. Véhicule (1) automobile selon la revendication précédente, **caractérisé en ce que** le joint d'étanchéité (10) comprend le dispositif lumineux (11) configuré pour émettre des rayons lumineux (12) vers l'intérieur du véhicule (1) automobile.

9. Procédé de montage d'un joint d'étanchéité (10) selon l'une des revendication 1 à 6 sur une caisse (2) d'un véhicule (1) automobile, **caractérisé en ce qu'**il comprend :
- une étape de fixation du joint d'étanchéité (10) sans son dispositif lumineux (11) à la caisse (2) du véhicule (1), puis
- une étape d'insertion d'un dispositif lumineux (11) sous la première lèvre (15), le dispositif lumineux (11) comprenant une barrette de LEDs (19) et/ou un tube réfléchissant (26) coopérant avec une unique source de lumière, puis
- une étape de fixation d'un élément de garniture intérieure (7) à la caisse (2) du véhicule, puis
- une étape de positionnement de la première lèvre (15) au- dessus de l'élément de garniture intérieure (7).

10. Procédé de montage selon la revendication précédente, selon lequel l'étape d'insertion du dispositif lumineux (11) sous la première lèvre (15) consiste en faire coopérer un premier moyen de retenue (21) avec un premier bord du dispositif lumineux (11), et un deuxième moyen de retenue (22) avec un deuxième bord du dispositif lumineux (11).

## Patentansprüche

1. Dichtung (10) für eine Tür (6) eines Kraftfahrzeugs (1), umfassend eine Verstärkung (13) und einen Elastomerteil (14), der die Verstärkung (13) bedeckt, wobei der Elastomerteil eine erste Lippe (15) umfasst, die dazu bestimmt ist, mindestens teilweise ein Innenverkleidungselement (7) eines Kraftfahrzeugs (1) zu bedecken, wobei die erste Lippe (15) eine Außenseite (15B), die dazu bestimmt ist, sichtbar zu sein, und eine Innenseite (15C), die dazu bestimmt ist, maskiert zu werden, umfasst, wobei die Dichtung eine erste abziehbare Schnur (27) umfasst, die mit der ersten Lippe (15) verbunden ist, **dadurch gekennzeichnet, dass** die Innenseite (15C) ein erstes Haltemittel (21) für eine Leuchtvorrichtung (11) umfasst, wobei das erste Haltemittel (21) eine aus Elastomer gebildete Wulst umfasst, und dass die Dichtung ein zweites Haltemittel (22) für eine Leuchtvorrichtung (11) umfasst, wobei das zweite Haltemittel (22) eine aus Elastomer gebildete Wulst umfasst und auf der Rückseite der Verstärkung gegen einen Boden (13C) der Verstärkung (13) und gegenüber dem ersten Haltemittel (21) positioniert ist, wobei die erste abziehbare Schnur (27) dazu bestimmt ist, von der Dichtung (10) getrennt zu werden, um eine Aufnahme freizulegen, welche die Montage der Leuchtvorrichtung (11) unter der ersten Lippe (15) ermöglicht.

2. Dichtung (10) nach dem vorhergehenden Anspruch, **dadurch gekennzeichnet, dass** sie eine zweite abziehbare Schnur (28) umfasst, die dazu bestimmt ist, von der Dichtung (10) getrennt zu werden, um eine richtige Positionierung der ersten Lippe (15) über dem Verkleidungselement (7) zu gewährleisten.

3. Dichtung (10) nach dem vorhergehenden Anspruch, **dadurch gekennzeichnet, dass** die erste Lippe (15) die Verstärkung (13) bedeckt.

4. Dichtung (10) nach einem der vorhergehenden Ansprüche, **dadurch gekennzeichnet, dass** sie eine zweite Lippe (16) umfasst, die dazu bestimmt ist, in geschlossener Stellung mit einer Tür (6) eines Kraftfahrzeugs (1) in Kontakt zu gelangen.

5. Dichtung (10) nach dem vorhergehenden Anspruch, **dadurch gekennzeichnet, dass** die erste Lippe (15) eine Außenfläche (15B) umfasst, die sich in der Verlängerung einer Außenfläche der zweiten Lippe (16) erstreckt.

6. Dichtung (10) nach einem der vorhergehenden Ansprüche, **dadurch gekennzeichnet, dass** sie einen im Wesentlichen konstanten Querschnitt (A-A) umfasst.

7. Kraftfahrzeug (1), umfassend einen Türrahmen (5), der mit einer Öffnung (4) versehen ist, eine Tür (6), die geeignet ist, die Öffnung (4) zu verschließen, und eine Dichtung (10) nach einem der vorhergehenden Ansprüche, wobei die Dichtung (10) an dem Türrahmen (5) befestigt ist.

8. Kraftfahrzeug (1) nach dem vorhergehenden Anspruch, **dadurch gekennzeichnet, dass** die Dichtung (10) die Leuchtvorrichtung (11) umfasst, die dazu ausgestaltet ist, Lichtstrahlen (12) zum Innenraum des Kraftfahrzeugs (1) zu emittieren.

9. Verfahren zur Montage einer Dichtung (10) nach einem der Ansprüche 1 bis 6 an einer Karosserie (2) eines Kraftfahrzeugs (1), **dadurch gekennzeichnet, dass** es umfasst:
- einen Schritt des Befestigens der Dichtung (10) ohne ihre Leuchtvorrichtung (11) an der Karosserie (2) des Fahrzeugs (1), dann
- einen Schritt des Einsetzens einer Leuchtvorrichtung (11) unter der ersten Lippe (15), wobei die Leuchtvorrichtung (11) eine LED-Leiste (19) und/oder eine reflektierende Röhre (26), die mit einer einzigen Lichtquelle zusammenwirkt, umfasst, dann
- einen Schritt des Befestigens eines Innenverkleidungselements (7) an der Karosserie (2) des Fahrzeugs, dann
- einen Schritt des Positionierens der ersten Lippe (15) über dem Innenverkleidungselement (7).

10. Verfahren zur Montage nach dem vorhergehenden Anspruch, wobei der Schritt des Einsetzens der Leuchtvorrichtung (11) unter der ersten Lippe (15) darin besteht, ein erstes Haltemittel (21) mit einer ersten Kante der Leuchtvorrichtung (11) und ein zweites Haltemittel (22) mit einer zweiten Kante der Leuchtvorrichtung (11) zusammenwirken zu lassen.

## Claims

1. Seal (10) for a door (6) of a motor vehicle (1), comprising a framework (13) and an elastomer part (14) covering the framework (13), the elastomer part comprising a first lip (15) intended to at least partially cover an inner trim element (7) of a motor vehicle (1), the first lip (15) comprising an outer face (15B) intended to be visible and an inner face (15C) intended to be concealed, the seal comprising a first peelable bead (27) connected to the first lip (15), **characterized in that** the inner face (15C) comprises a first means (21) for retaining a luminous device (11), the first retaining means (21) comprising a ridge formed of elastomer, and **in that** the seal comprises a second means (22) for retaining a luminous device (11), the second retaining means (22) comprising a ridge formed of elastomer, and positioned on the back of the framework, against a base (13C) of the framework (13) and opposite the first retaining means (21), the first peelable bead (27) being intended to be detached from the seal (10) in order to uncover a housing that makes it possible to mount the lighting device (11) under the first lip (15).

2. Seal (10) according to the preceding claim, **characterized in that** it comprises a second peelable bead (28) being intended to be detached from the seal (10) to ensure correct positioning of the first lip (15) above the trim element (7).

3. Seal (10) according to the preceding claim, **characterized in that** the first lip (15) covers the framework (13).

4. Seal (10) according to one of the preceding claims, **characterized in that** it comprises a second lip (16) intended to come into contact with a door (6) of a motor vehicle (1) in the closed position.

5. Seal (10) according to the preceding claim, **characterized in that** the first lip (15) comprises an outer surface (15B) extending in the continuation of an outer surface of the second lip (16).

6. Seal (10) according to one of the preceding claims, **characterized in that** it comprises a substantially constant transverse section (A-A).

7. Motor vehicle (1) comprising a door frame (5) provided with an opening (4), a door (6) capable of closing said opening (4), and a seal (10) according to one of the preceding claims, the seal (10) being attached to the door frame (5).

8. Motor vehicle (1) according to the preceding claim, **characterized in that** the seal (10) comprises the luminous device (11) configured to emit light rays (12) towards the interior of the motor vehicle (1).

9. Method for mounting a seal (10) according to one of Claims 1 to 6 on a body (2) of a motor vehicle (1), **characterized in that** it comprises:
- a step of attaching the seal (10) without its luminous device (11) to the body (2) of the vehicle (1), then
- a step of inserting a luminous device (11) under the first lip (15), the luminous device (11) comprising a strip of LEDs (19) and/or a reflective tube (26) cooperating with a single light source, then
- a step of attaching an inner trim element (7) to the body (2) of the vehicle, then
- a step of positioning the first lip (15) above the inner trim element (7).

10. Mounting method according to the preceding claim, wherein the step of inserting the luminous device (11) under the first lip (15) consists in making a first retaining means (21) cooperate with a first edge of the luminous device (11), and a second retaining means (22) with a second edge of the luminous device (11).
